# EUROPÄISCHE PATENTSCHRIFT

(11) **EP 3 433 999 B1**
(45) Veröffentlichungstag und Bekanntmachung des Hinweises auf die Patenterteilung: **29.05.2019**
(21) Anmeldenummer: 17780634.6
(22) Anmeldetag: 19.09.2017
(51) Int. Cl.: H04L 29/08

(54) **VERFAHREN ZUM SENKEN EINES ENERGIEBEDARFS EINES FAHRZEUGS**
METHOD FOR LOWERING AN ENERGY DEMAND OF A VEHICLE
PROCÉDÉ POUR RÉDUIRE LES BESOINS ÉNERGÉTIQUES D'UN VÉHICULE

(30) Priorität: 10.10.2016 DE 102016219645
(43) Veröffentlichungstag der Anmeldung: 30.01.2019
(73) Patentinhaber: Audi AG, 85045 Ingolstadt (DE)
(72) Erfinder: SCHMITT, Nicholas, 85049 Ingolstadt (DE); AL HADDAD, Christian, 85049 Ingolstadt (DE)
(86) Internationale Anmeldenummer: PCT/EP2017/073530
(87) Internationale Veröffentlichungsnummer: WO 2018/068999

(56) Entgegenhaltungen:
- JP-A- 2007 072 801
- US-A1- 2002 188 384
- Grzegorz Chmaj ET AL: "Author's copy Distributed processing applications for UAV/drones: a survey", , 1. August 2014 (2014-08-01), XP055422128, Gefunden im Internet: URL:https://www.researchgate.net/profile/G rzegorz_Chmaj/publication/267811645_Distri buted_Processing_Applications_for_UAVdrone s_A_Survey/links/545b13a10cf2c46f6643937d/ Distributed-Processing-Applications-for-UA V-drones-A-Survey.pdf [gefunden am 2017-11-06]

## Beschreibung

Die vorliegende Erfindung betrifft ein Verfahren zum Verteilen einer Rechenlast eines Stammfahrzeugs. Ferner betrifft die vorliegende Erfindung ein Rechensystem mit einem Stammfahrzeug und einer Anzahl weiterer Fahrzeuge.

Fahrzeuge umfassen in der Regel Steuergeräte, die dazu konfiguriert sind, komplexe und große Datenmengen zu verarbeiten. Dabei kann es vorkommen, dass zum Verarbeiten jeweiligen Daten, d. h. zum Durchführen von Rechenoperation anhand jeweiliger Daten, eine Menge an Elektrizität benötigt wird, die im Falle eines mittels einer Brennkraftmaschine angetriebenen Fahrzeugs aufwendig mittels eines Generators bereitgestellt werden muss. Da zum Antreiben eines Generators in der Regel eine Brennkraftmaschine verwendet wird, führen von einem jeweiligen Steuergerät durchgeführte Rechenoperationen letztlich zu einem erhöhten Kraftstoffverbrauch der Brennkraftmaschine eines jeweiligen Fahrzeugs.

Aus der US 2016/0198485 A1 geht ein Verfahren zum Aufteilen der Rechenlast eines Stammfahrzeugs zwischen dem Stammfahrzeug und einem zweiten Fahrzeug, das in Kommunikationsreichweite des Stammfahrzeugs auf derselben Straße unterwegs ist, hervor.

Aus der DE 10 2007 045 519 A1 sind eine drahtlose Kommunikationseinrichtung und ein Server-basiertes Verfahren zur Kommunikation zwischen Fahrzeugen bekannt. Durch Unicast- und Multicast-Nachrichtenübermittlung wird eine Vielzahl effektiver Kommunikationsmodelle bereitgestellt, welche durch Auswertung von GPS-Ortsinformationen auch regional zugeschnitten werden können.

Die DE 10 2009 045 711 A1 offenbart eine Datenübertragungs-, Versorgungs- und Ladevorrichtung mit einer Datenschnittstelle, die sowohl Energie an einen Energiespeicher als auch fahrzeug- oder fahrerbezogene Daten über ein Ladekabel oder elektrische Leitung überträgt. Die Datenübertragungs-, Versorgungs- und Ladevorrichtung kann eine Kommunikationseinheit umfassen, die es ermöglicht, auch Daten während der Fahrt ohne einen elektrischen Anschluss zu empfangen und zu senden.

Die US 2015/0200810 A1 offenbart ein vermaschtes Netzwerk, das aus mehreren Fahrzeugen gebildet wird, die sich in räumlicher Nähe zueinander befinden und miteinander drahtlos über Funk kommunizieren.

Die Patentveröffentlichung JP 2007 072801 A (TOYOTA INFOTECH CT CO LTD; TOYOTA MOTOR CORP) (2007-03-22) behandelt die Verteilung von Rechenaufgaben auf eine Gruppe von Fahrzeugen.

Vor diesem Hintergrund ist es eine Aufgabe der vorgestellten Erfindung, eine Möglichkeit zum Senken eines Energieverbrauchs eines Fahrzeugs bereitzustellen.

Zur Lösung der voranstehend genannten Aufgabe wird ein Verfahren gemäß Anspruch 1 vorgestellt.

Ausgestaltungen der vorliegenden Erfindung ergeben sich aus der Beschreibung und den abhängigen Ansprüchen.

Das vorgestellte Verfahren dient insbesondere zum Senken eines Energieverbrauchs eines Fahrzeugs. Dazu ist erfindungsgemäß vorgesehen, dass zum Lösen einer an ein Steuergerät des Fahrzeugs übermittelten Aufgabe erforderliche Rechenoperationen auf ein aus einer Anzahl weiterer Fahrzeuge bestehendes System bzw. Rechennetzwerk aufgeteilt wird.

Um jeweilige zum Abarbeiten einer Aufgabe, wie bspw. einer Verarbeitung von Schwarmdaten zum Steuern eines Verbunds von Fahrzeugen, erforderliche Rechenoperationen von einem Stammfahrzeug auf ein aus einer Anzahl weiterer Fahrzeuge bestehendes System aufzuteilen, ist es insbesondere vorgesehen, dass die Rechenoperationen in eine Vielzahl Aufgabenpakete aufgeteilt werden und jeweilige Aufgabenpakete zu jeweiligen Fahrzeugen der Anzahl weiterer Fahrzeuge übertragen werden. Jeweilige Aufgabenpakete der Vielzahl Aufgabenpakete werden von jeweiligen Fahrzeugen der Anzahl weiterer Fahrzeuge abgearbeitet. Dies bedeutet, dass die jeweiligen Fahrzeuge der Anzahl weiterer Fahrzeuge, den jeweiligen an sie übermittelten Aufgabenpaketen zugeordnete Rechenoperationen durchführen und ein Ergebnis einer jeweiligen Rechenoperation bzw. ein Ergebnis eines jeweiligen Aufgabenpakets an das Stammfahrzeug zurück übertragen. Das Stammfahrzeug wird durch die Verteilung der Rechenoperationen auf die Anzahl weiterer Fahrzeuge von der Durchführung der Rechenoperationen entlastet und verbraucht entsprechend weniger Energie, da weniger Elektrizität durch den Generator des Fahrzeugs bereitgestellt werden muss, wodurch sich ein Kraftstoffverbrauch einer Brennkraftmaschine des Fahrzeugs reduziert.

In einer möglichen Ausgestaltung des vorgestellten Verfahrens ist vorgesehen, dass die Anzahl weiterer Fahrzeuge aus Fahrzeugen ausgewählt wird, die sich aktuell in einem deaktivierten Zustand befinden.

Um einen Energieverbrauch eines Stammfahrzeugs nicht auf Kosten jeweiliger weiterer Fahrzeuge zu reduzieren und deren Brennkraftmaschinen bzw. Batterien nicht mit zum Bereitstellen einer für jeweilige Rechenoperationen erforderlichen Menge an Elektrizität zu belasten, kann es vorgesehen sein, dass lediglich solche Fahrzeuge als weitere Fahrzeuge ausgewählt und zum Abarbeiten jeweiliger Aufgabenpakete bzw. jeweiliger einem Aufgabenpaket zugeordneter Rechenoperationen verwendet werden, die sich aktuell in einem deaktivierten Zustand, d. h. einem Zustand, in dem das Fahrzeug nicht bewegt wird, befinden. Um jeweilige deaktivierte Fahrzeuge aus bspw. einer Gruppe von Fahrzeugen zu erkennen, kann vorgesehen sein, dass lediglich dann Aufgabenpakete an ein Fahrzeug übertragen werden, wenn sich das in einem Zustand "Zündung aus" befindet und/oder mit einer Ladestation verbunden ist. Dazu kann es vorgesehen sein, dass jeweilige deaktivierte Fahrzeuge ihren Zustand an einen Server übertragen, der als zentrale Auskunftsstelle zur Zuweisung von weiteren Fahrzeugen zu einem Stammfahrzeug bzw. zur Auswahl von weiteren Fahrzeugen durch ein Stammfahrzeug dient.

Weiterhin ist es denkbar, dass lediglich dann Daten an ein Fahrzeug übertragen werden, wenn das Fahrzeug ein Bereitschaftssignal sendet oder aktuell ein Bereitschaftssignal an einer zentralen Auskunftsstelle, wie bspw. einem Server hinterlegt hat. Bspw. kann es vorgesehen sein, dass, wenn ein Fahrzeug in einer Garage oder auf einem Parkplatz abgestellt wird, das Fahrzeug ein Bereitschaftssignal aussendet, das von dem erfindungsgemäß vorgesehenen Stammfahrzeug empfangen wird. Aufgrund des empfangenen Bereitschaftssignals überträgt das Stammfahrzeug, bspw. über eine Mobilfunkschnittstelle, einem jeweiligen Aufgabenpaket zugeordnete Daten an das abgestellte Fahrzeug. Das abgestellte Fahrzeug berechnet mittels jeweiliger von dem abgestellten Fahrzeug umfasster Steuergeräte jeweilige dem Aufgabenpaket zugeordnete Rechenoperationen und sendet jeweilige Ergebnisse, ebenfalls über die Mobilfunkschnittstelle, zurück an das Stammfahrzeug.

In einer weiteren möglichen Ausgestaltung des vorgestellten Verfahrens ist vorgesehen, dass jeweilige Aufgabenpakete an ein jeweiliges Fahrzeug der Anzahl weiterer Fahrzeugs mittels einer mit dem jeweiligen Fahrzeug verbundenen und bezüglich des Fahrzeugs extern, d. h. außerhalb eines Fahrzeugs, angeordneten Kommunikationsschnittstelle, wie bspw. einer Ladesäule, übertragen werden.

Es ist insbesondere denkbar, dass ein jeweiliges weiteres Fahrzeug bei einem Abstellvorgang mit einer Kommunikationsschnittstelle verbunden wird, die zum Übertragen von Daten zur Durchführung des vorgestellten Verfahrens konfiguriert ist. Dabei kann die Kommunikationsschnittstelle bspw. mit einem Element zum Versorgen einer Batterie des weiteren Fahrzeugs eine technische Einheit bilden, so dass das weitere Fahrzeug automatisch bei einem Ladevorgang zur Durchführung des vorgestellten Verfahrens zur Verfügung gestellt bzw. zur Durchführung des vorgestellten Verfahrens konfiguriert wird.

In einer weiteren möglichen Ausgestaltung des vorgestellten Verfahrens ist vorgesehen, dass die Verteilung der Aufgabenpakete auf die Anzahl weiterer Fahrzeuge von einem Steuergerät des Stammfahrzeugs verwaltet wird.

Um eine Verteilung jeweiliger Aufgabenpakete zu verwalten, d.h. bspw. jeweilige Datenpakete zu bilden, an jeweilige weitere Fahrzeuge zu übertragen und entsprechend berechnete Ergebnisse zu empfangen und zu einem Gesamtergebnis zu integrieren, kann ein Steuergerät des Stammfahrzeugs oder ein zentraler Server verwendet werden.

In einer weiteren möglichen Ausgestaltung des vorgestellten Verfahrens ist vorgesehen, dass in Abhängigkeit einer Verfügbarkeit jeweiliger Fahrzeuge der Anzahl weiterer Fahrzeuge eine Anzahl Aufgabenpakete an einen Server übertragen wird. Dabei können von dem Server durch die Aufgabenpakete vorgegebene Rechenoperationen durchgeführt und jeweilige Ergebnisse der durch die Aufgabenpakete vorgegebenen Rechenoperationen an das Stammfahrzeug und/oder mindestens ein Fahrzeug der Anzahl weiterer Fahrzeuge übertragen werden.

Um ein jeweiliges Stammfahrzeug auch für den Fall, dass aktuell zum Durchführen jeweiliger zum Abarbeiten einer Aufgabe durchzuführender Rechenoperationen in einem vorgegebenen Zeitfenster nicht genügend weitere Fahrzeuge verfügbar sind bzw. zum Durchführen der Rechenoperationen verwendet werden können, zu entlasten, kann es vorgesehen sein, dass zum Durchführen der Rechenoperationen mindestens ein Server verwendet wird. Zum Beschränken einer in Form des mindestens einen Servers vorzuhaltenden Rechenkapazität ist es insbesondere vorgesehen, dass jeweilige durchzuführende Rechenoperationen nur dann von dem mindestens einen Server vorgenommen werden, wenn die Rechenoperationen aktuell nicht durch eine Verwendung jeweiliger weiterer Fahrzeuge abarbeitbar sind.

In dem vorgestellten Verfahren ist vorgesehen, dass das Fahrzeug in Abhängigkeit einer aktuellen Uhrzeit und/oder einer geographischen Position des Fahrzeugs der Anzahl weiterer Fahrzeuge zugeordnet wird.

Um ein Abarbeiten einer Aufgabe durch auf eine Vielzahl Fahrzeuge verteilte Rechenoperationen durchzuführen, kann es vorgesehen sein, dass lediglich solche Fahrzeuge als Teil eines jeweiligen verteilten Rechennetzwerks ausgewählt, d. h. zum Abarbeiten jeweiliger Rechenoperationen einem jeweiligen Stammfahrzeug zugewiesen werden, die voraussichtlich für einen zum Durchführen jeweiliger Rechenoperationen ausreichend langen Zeitraum verfügbar sind. Dazu können insbesondere solche Fahrzeuge zur Durchführung jeweiliger Rechenoperationen gewählt werden, die sich aktuell in einer Zeitzone befinden, in der Nachtruhe herrscht, so dass die Wahrscheinlichkeit, dass ein jeweiliger Nutzer ein jeweiliges Fahrzeug nutzen möchte und von einer Verwendung als weiteres Fahrzeug zur Durchführung von Rechenoperationen ausschließt, minimiert wird.

Selbstverständlich können als weitere Fahrzeuge zur Durchführung jeweiliger Rechenoperationen auch solche Fahrzeuge gewählt werden, die aktuell im Betrieb sind, d. h. die aktuell unter Verwendung bspw. einer Brennkraftmaschine oder eines elektrischen Antriebs bewegt werden, wobei ein jeweiliger Nutzer eines jeweiligen Fahrzeugs das jeweilige Fahrzeug von der Durchführung von Rechenoperationen für andere Fahrzeuge ausnehmen kann.

Weiterhin kann auch eine geographische Position bei der Auswahl jeweiliger weiterer Fahrzeuge berücksichtigt werden. So eignen sich Fahrzeuge, die sich bspw. innerhalb eines vorgegebenen Radius um das Stammfahrzeug befinden besonders vorteilhaft zum Durchführen jeweiliger Rechenoperationen für ein Stammfahrzeug. Da das Stammfahrzeug mit diesen Fahrzeugen besonders schnell, bspw. innerhalb eines Netzwerks, d. h. ohne eine Verwendung von Relaisstationen, kommunizieren kann. Selbstverständlich können jeweilige weitere zum Durchführen jeweiliger Rechenoperationen verwendete Fahrzeuge auch in Abhängigkeit weiterer Kriterien, wie bspw. einer Flotten- oder Gruppenzugehörigkeit ausgewählt werden.

In einer weiteren möglichen Ausgestaltung des vorgestellten Verfahrens ist vorgesehen, dass jeweilige Ergebnisse von Rechenoperationen jeweiliger Aufgabenpakete zwischen verschiedenen Fahrzeugen der Anzahl weiterer Fahrzeuge ausgetauscht werden.

Um auch komplexe Aufgaben abzuarbeiten, kann es erforderlich sein, dass Zwischenergebnisse zum Berechnen jeweiliger einem Aufgabenpaket zugeordneter Rechenoperationen benötigt werden. Diese Zwischenergebnisse können durch ein Fahrzeug, das auf Grundlage der Zwischenergebnisse weitere Rechenoperationen durchzuführen hat, von einem jeweiligen weiteren Fahrzeug, das Rechenoperationen zum Ermitteln der Zwischenergebnisse durchzuführen hat, angefordert werden. Weiterhin ist es denkbar, dass jeweilige weitere Fahrzeuge in Klassen eingeteilt werden, die zur Durchführung von Rechenoperationen entweder zum Ermitteln von Zwischenergebnissen oder zur Durchführung von Rechenoperationen auf Grundlage von Zwischenergebnissen vorgesehen sind.

In einer weiteren möglichen Ausgestaltung des vorgestellten Verfahrens ist vorgesehen, dass mittels der Anzahl weiterer Fahrzeuge ein vermaschtes Netzwerk gebildet wird.

Um Ergebnisse und Zwischenergebnisse zwischen jeweiligen weiteren Fahrzeugen und dem Stammfahrzeug auszutauschen, eignet sich eine Verbindung gemäß einem vermaschten Netzwerk, bei dem jedes Fahrzeug mit allen weiteren Fahrzeugen, ggf. über eine Anzahl weiterer Fahrzeuge als Relaisstation, in kommunikativer Verbindung steht.

In einer weiteren möglichen Ausgestaltung des vorgestellten Verfahrens ist vorgesehen, dass jeweilige an die Anzahl weiterer Fahrzeuge zu übertragende Aufgabenpakete nach einem zur Durchführung jeweiliger den Aufgabenpaketen zugeordneten Rechenoperationen erforderlichen Energieaufwand ausgewählt werden.

Um eine möglichst große Menge an Energie mittels des erfindungsgemäßen Verfahrens zu sparen, kann vorgesehen sein, dass priorisiert solche Aufgabenpakete an jeweilige weitere Fahrzeuge verteilt werden, die einen besonders hohen Berechnungsaufwand und entsprechend einen besonders hohen Energieaufwand erfordern.

Ferner betrifft die vorliegende Erfindung ein Rechensystem gemäß Anspruch 10.

Das vorgestellte Rechensystem dient insbesondere zur Durchführung des vorgestellten Verfahrens.

In einer möglichen Ausgestaltung des vorgestellten Rechensystems ist vorgesehen, dass das Rechensystem mindestens einen Server umfasst, an den jeweilige Aufgabenpakete, die keinem Fahrzeug der Anzahl weiterer Fahrzeuge zugeordnet wurden, übertragen werden. Dabei ist der mindestens eine Server dazu konfiguriert, die Rechenoperationen, die den an den mindestens einen Server übertragenen Aufgabenpaketen zugeordnet sind, durchzuführen und Ergebnisse der Rechenoperationen an das Stammfahrzeug und/oder mindestens ein Fahrzeug der Anzahl weiterer Fahrzeuge zu übertragen.

Um für den Fall eines Mangels an weiteren Fahrzeugen zur Durchführung von Rechenoperationen, d. h. Berechnungen, eine Möglichkeit zum Verteilen jeweiliger für eine Aufgabe eines Stammfahrzeugs erforderlicher Rechenoperationen bereitzustellen, kann ein Rechensystem, wie bspw. eine Anzahl Server vorgesehen sein, die als Notreserve die Rechenoperationen durchführen.

In einer weiteren möglichen Ausgestaltung des vorgestellten Verfahrens ist vorgesehen, dass jeweilige Fahrzeuge der Anzahl weiterer Fahrzeuge über eine bezüglich eines jeweiligen Fahrzeugs externe Kommunikationsschnittstelle mit dem Stammfahrzeug und/oder dem mindestens einen Server verbunden sind. Dabei ist die Kommunikationsschnittstelle dazu konfiguriert, das jeweilige Fahrzeug mit Elektrizität zu versorgen.

Um ein Fahrzeug, das bspw. keine fahrzeuginterne Kommunikationsschnittstelle aufweist oder nicht zur Durchführung des vorgestellten Verfahrens konfiguriert ist, zur Durchführung des vorgestellten Verfahrens zu konfigurieren, kann eine externe Einheit verwendet werden, die das Fahrzeug mit den zur Durchführung des vorgestellten Verfahrens benötigten Daten versorgt. Dabei kann die externe Einheit bspw. als Ladestation für ein Elektrofahrzeug ausgestaltet sein, so dass ein Fahrzeug, das zum Laden mit der Ladestation verbunden wird, automatisch Teil eines Netzwerks wird, das ein jeweiliges Stammfahrzeug bei der Durchführung von Rechenaufgaben unterstützt.

In einer weiteren möglichen Ausgestaltung des vorgestellten Rechensystems ist vorgesehen, dass das Steuergerät des Stammfahrzeugs dazu konfiguriert ist, einen zur Durchführung jeweiliger einem Aufgabenpaket zugeordneten Rechenoperationen erforderlichen Energieverbrauch zu ermitteln und jeweilige an die Anzahl weiterer Fahrzeuge zu übertragende Aufgabenpakete in Abhängigkeit ihrer Eignung einen Energieverbrauch des Stammfahrzeugs zu senken, priorisiert an die Anzahl weiterer Fahrzeuge zu übertragen.

Um einen Energieverbrauch eines Stammfahrzeugs zu senken, kann es vorgesehen sein, dass ein Energieverbrauch jeweiliger Rechenoperationen ermittelt wird und anhand jeweiliger ermittelter Energieverbräuche für verschiedene Rechenoperationen beurteilt wird, ob eine Verteilung der Rechenoperationen auf weitere Fahrzeuge energetisch sinnvoll ist. Falls die Verteilung jeweiliger Rechenoperation auf weitere Fahrzeuge energetisch sinnvoll ist, d. h. zum Einsparen von Energie führt, können die jeweiligen Rechenoperationen bzw. entsprechende Aufgabenpakete nach einer entsprechenden Menge an einzusparender Energie sortiert und entsprechend priorisiert an jeweilige weitere Fahrzeuge übertragen werden.

Weitere Vorteile und Ausgestaltungen ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in der Zeichnung schematisch dargestellt und wird unter Bezugnahme auf die Zeichnung schematisch und ausführlich beschrieben.
Figur 1 zeigt eine mögliche Ausgestaltung des erfindungsgemäßen Rechensystems.
Figur 2 zeigt eine weitere mögliche Ausgestaltung des erfindungsgemäßen Rechensystems.
Figur 3 zeigt ein Auswahlkriterium zur Auswahl von Fahrzeugen zur Durchführung einer möglichen Ausgestaltung des erfindungsgemäßen Verfahrens.

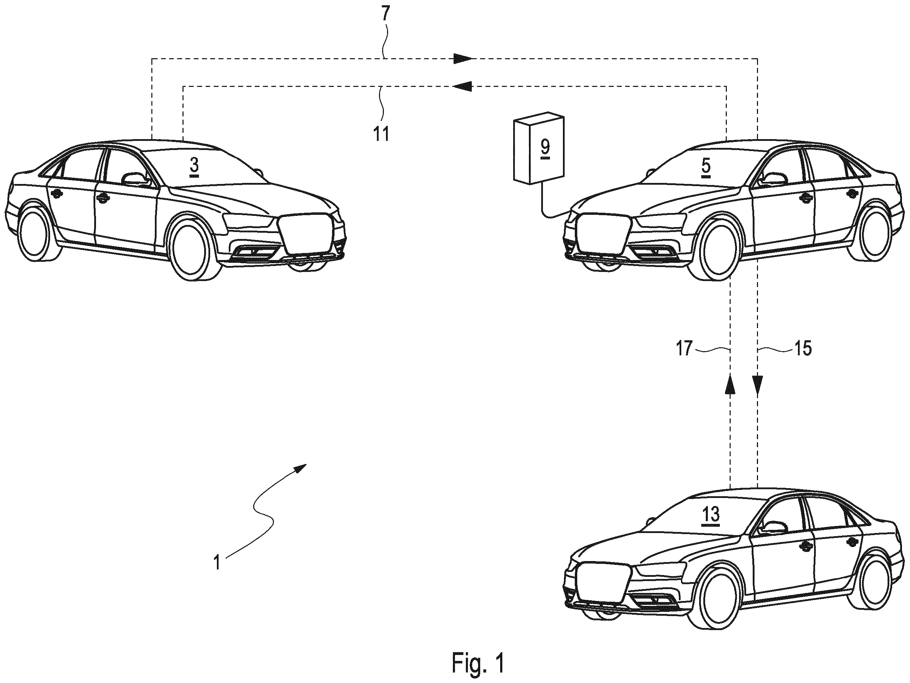

In Figur 1 ist ein Rechensystem mit einem Stammfahrzeug 3 und weiteren Fahrzeugen 5 und 13 dargestellt. Das Stammfahrzeug 3 muss, bspw. zum Kalibrieren eines technischen Systems, eine Vielzahl von Rechenoperationen durchführen. Würden alle Rechenoperationen von einem Steuergerät des Stammfahrzeugs 3 durchgeführt, würde das Steuergerät einen hohen Verbrauch an Elektrizität zeigen. Um das Steuergerät mit einer entsprechend hohen Menge an Elektrizität zu versorgen, müsste eine Brennkraftmaschine des Stammfahrzeugs 3 einen Generator antreiben und entsprechend viel Kraftstoff verbrauchen oder eine Batterie entsprechend beansprucht werden.

Um einen Energieverbrauch des Stammfahrzeugs 3 zu senken, ist es vorgesehen, dass die von dem Steuergerät des Stammfahrzeugs 3 durchzuführenden Rechenoperationen zumindest teilweise auf die weiteren Fahrzeuge 5 und 13 verteilt werden. Dazu teilt das Stammfahrzeug 3 die durchzuführenden Rechenoperationen in Aufgabenpakete ein und übermittelt zum Abarbeiten eines jeweiligen Aufgabenpakets erforderliche Daten zusammen mit einer entsprechenden Rechenanweisung an das weitere Fahrzeug 5, wie durch Pfeil 7 angedeutet. Dabei wird das weitere Fahrzeug 5 in Abhängigkeit eines Aktivitätszustands eines Antriebs des weiteren Fahrzeugs 5 aus einer Anzahl weiterer Fahrzeuge ausgewählt.

Da sich das weitere Fahrzeug 5 aktuell in einem Ruhezustand befindet, wie durch eine Verbindung zu einer Ladestation 9 angedeutet, eignet sich das weitere Fahrzeug 5 besonders vorteilhaft zum Durchführen von Rechenoperationen für das Stammfahrzeug 3. Sollte das weitere Fahrzeug 5 elektrische Energie zum Durchführen von Rechenoperationen zum Abarbeiten jeweiliger von dem Stammfahrzeug übertragener Aufgabenpakete benötigen, kann das weitere Fahrzeug 5 elektrische Energie über die Ladestation 9 beziehen.

Sobald das weitere Fahrzeug 5 die Rechenoperationen zu einem jeweiligen Aufgabenpaket abgeschlossen hat, überträgt das weitere Fahrzeug 5 entsprechende Ergebnisse zurück an das Stammfahrzeug 3, wie durch Pfeil 11 angedeutet.

Sollte das weitere Fahrzeug 5 jeweilige zum Abarbeiten jeweiliger Aufgabenpakete erforderliche Rechenoperationen nicht in einem von bspw. dem Stammfahrzeug 3 vorgegebenen zeitlichen Rahmen durchführen können oder wird das weitere Fahrzeug 5 während entsprechender Rechenoperationen aktiviert, d. h. in einen fahrbereiten Zustand gebracht, in dem das weitere Fahrzeug 5 die Rechenkapazität seines Steuergeräts selbst benötigt, überträgt das weitere Fahrzeug 5 jeweilige noch zu berechnende Aufgabenpakete an das weitere Fahrzeug 13, wie durch Pfeil 15 angedeutet.

Sobald das weitere Fahrzeug 13 die Rechenoperationen zu einem jeweiligen Aufgabenpaket abgeschlossen hat, überträgt das weitere Fahrzeug 13 entsprechende Ergebnisse zurück an das Stammfahrzeug 3 oder das weitere Fahrzeug 5, wie durch Pfeil 17 angedeutet, so dass das weitere Fahrzeug 5 die Ergebnisse an das Stammfahrzeug 3 übertragen kann, wie durch Pfeil 11 angedeutet.

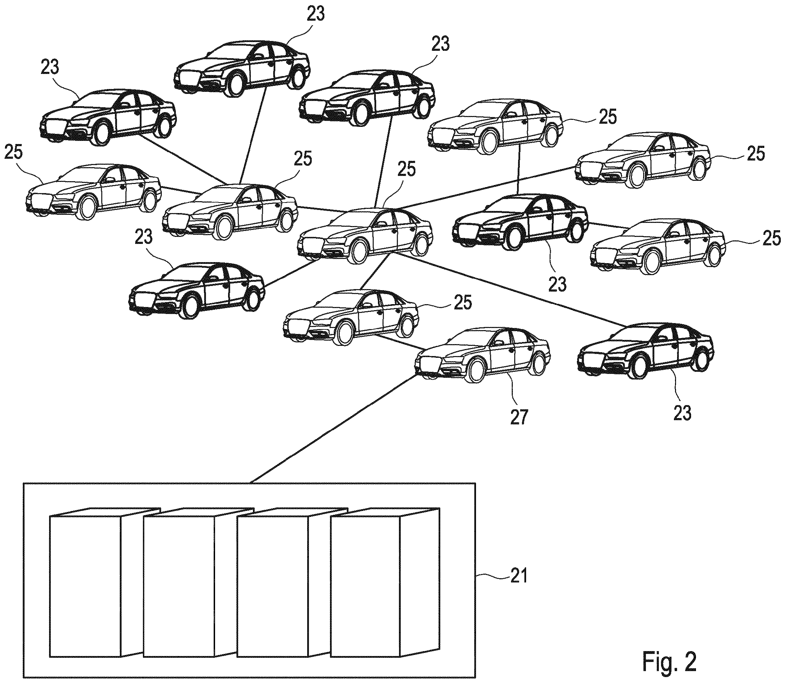

In Figur 2 ist ein Netzwerk, aus einer Vielzahl Fahrzeuge 23 und 25, einem Stammfahrzeug 27 und einem Servernetzwerk 21 dargestellt. Die Fahrzeuge 23 sind aktivierte Fahrzeuge, d. h. Fahrzeuge, die aktuell zur Fortbewegung eingesetzt werden, wohingegen die Fahrzeuge 25 deaktiviert und bspw. auf einem Parkplatz abgestellt sind.

Zur Durchführung des vorgestellten Verfahrens ist es insbesondere vorgesehen, dass zur Durchführung von Rechenoperationen für ein jeweiliges Stammfahrzeug lediglich deaktivierte Fahrzeuge 25 angesteuert werden. Sollte eine Anzahl von deaktivierten Fahrzeugen 25 zur Durchführung von Rechenoperationen in einem vorgegebenen Zeitraum nicht ausreichen, ist es vorgesehen, dass nicht an deaktivierte Fahrzeuge 25 zu verteilende Aufgabenpakete an das Servernetzwerk 21 übertragen und dort abgearbeitet werden.

Zum Übertragen von zur Durchführung jeweiliger Rechenoperationen benötigter Daten ist insbesondere vorgesehen, dass die Fahrzeuge 23 und 25 sowohl untereinander als auch mit einem jeweiligen Stammfahrzeug 27 mittels drahtloser Kommunikation, bspw. in einem vermaschten Netzwerk, in Verbindung stehen. Es ist beispielsweise vorgesehen, dass das Stammfahrzeug 27 über eine Funkdatenschnittstelle nach einem sogenannten "5G-Standard" mit Datenraten von bis zu 10.000Mbit/s mit dem Servernetzwerk 21 und/oder zumindest einem Teil der Fahrzeuge 25 in aktiver kommunikativer Verbindung steht, d. h. mit dem Fahrzeugen 25 Daten austauscht.

Durch eine Verteilung von Rechenoperationen auf die Fahrzeuge 25 und/oder das Servernetzwerk 21 wird eine schnelle Durchführung der Rechenoperationen bei einer hohen Ausfallsicherheit ermöglicht. Durch eine mehrfache bzw. redundante Verteilung jeweiliger Rechenoperationen auf verschiedene Fahrzeuge 25 und/oder das Servernetzwerk 21 kann die Ausfallsicherheit bei Bedarf, bspw. für besonders sicherheitsrelevante Aufgaben, maximiert werden.

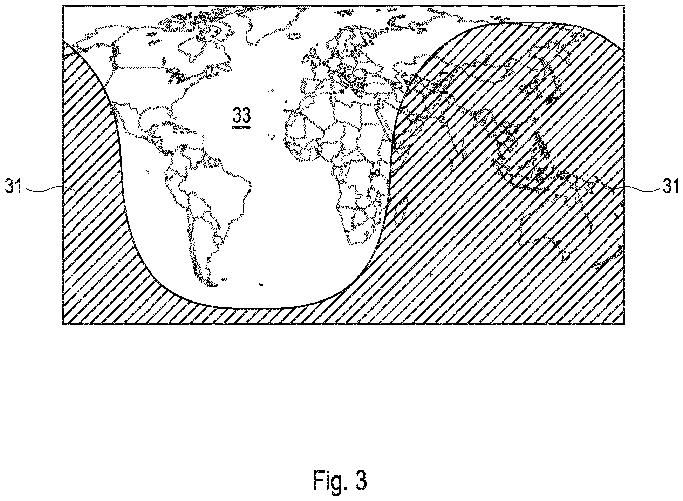

In Figur 3 ist eine Verteilung von Tageslicht über einer Karte der Erde dargestellt. Zur Durchführung des vorgestellten Verfahrens ist es insbesondere vorgesehen, dass solche Fahrzeuge als weitere Fahrzeuge zur Durchführung von Rechenoperationen für ein Stammfahrzeug gewählt werden, die sich aktuell in einer nicht mit Tageslicht versorgten Zone 31 befinden, da in der nicht mit Tageslicht versorgten Zone 31 eine höhere Wahrscheinlichkeit dafür besteht, dass sich dort deaktivierte Fahrzeuge befinden als es in einer mit Tageslicht versorgten Zone 33 zu erwarten ist.

## Patentansprüche

1. Verfahren zum Verteilen einer Rechenlast eines Stammfahrzeugs (3), bei dem zum Lösen einer vorgegebenen Aufgabe des Stammfahrzeugs (3) durchzuführende Rechenoperationen in Aufgabenpakete, die jeweils eine Anzahl Rechenoperationen umfassen, aufgeteilt werden, und bei dem die Aufgabenpakete von dem Stammfahrzeug (3) auf eine Anzahl weiterer Fahrzeuge (5, 13, 25) verteilt und jeweilige Aufgabenpakete an jeweilige Fahrzeuge der Anzahl weiterer Fahrzeuge (5, 13, 25) übertragen werden, und bei dem durch die Anzahl weiterer Fahrzeuge (5, 13, 25) den Aufgabenpaketen zugeordnete Rechenoperationen durchgeführt und jeweilige Ergebnisse der den Aufgabenpaketen zugeordneten Rechenoperationen an das Stammfahrzeug (3) übertragen werden, **dadurch gekennzeichnet, dass** die Anzahl weiterer Fahrzeuge (5, 13, 25) aus Fahrzeugen (25) ausgewählt wird, die sich aktuell in einem deaktivierten Zustand befinden, d. h. einem Zustand, in dem das Fahrzeug (25) nicht bewegt wird, wobei jeweilige deaktivierte Fahrzeuge (25) ihren Zustand an einen Server (21) übertragen, der als zentrale Auskunftsstelle zur Auswahl von weiteren Fahrzeugen (5, 13, 25) durch das Stammfahrzeug (3) dient.

2. Verfahren nach Anspruch 1, wobei die Fahrzeuge, die sich aktuell in einem deaktivierten Zustand befinden, mit einer Ladestation verbunden sind.

3. Verfahren nach Anspruch 1 oder 2, bei dem die Verteilung der Aufgabenpakete auf die Anzahl weiterer Fahrzeuge (5, 13, 25) von einem Steuergerät des Stammfahrzeugs (3) verwaltet wird.

4. Verfahren nach Anspruch 1 oder 2, bei dem zur Verteilung der Aufgabenpakete auf die Anzahl weiterer Fahrzeuge (5, 13, 25) die Datenpakete in einem ersten Schritt von dem Stammfahrzeug (3) zu einem Server (21) und in einem weiteren Schritt von dem Server (21) zu der Anzahl weiterer Fahrzeuge (5, 13, 25) übertragen werden, und bei dem die Verteilung der Aufgabenpakete an die Anzahl weiterer Fahrzeuge (5, 13, 25) von dem Server (21) verwaltet wird.

5. Verfahren nach einem der voranstehenden Ansprüche, bei dem jeweilige Aufgabenpakete an ein jeweiliges Fahrzeug (5, 13, 25) der Anzahl weiterer Fahrzeuge (5, 13, 25) mittels einer mit dem jeweiligen Fahrzeug (5, 13, 25) verbundenen und bezüglich des jeweiligen Fahrzeugs (5, 13, 25) extern angeordneten Kommunikationsschnittstelle übertragen werden.

6. Verfahren nach einem der voranstehenden Ansprüche, bei dem für den Fall, das eine vorgegebene Mindestanzahl an verfügbaren weiteren Fahrzeugen (5, 13, 25) unterschritten wird, eine Anzahl Aufgabenpakete an einen Server (21) übertragen wird, und bei dem von dem Server (21) durch die Aufgabenpakete vorgegebene Rechenoperationen durchgeführt und jeweilige Ergebnisse der durch die Aufgabenpakete vorgegebenen Rechenoperationen an das Stammfahrzeug (3) und/oder mindestens ein Fahrzeug der Anzahl weiterer Fahrzeuge (5, 13, 25) übertragen wird.

7. Verfahren nach einem der voranstehenden Ansprüche, bei dem jeweilige Ergebnisse von Rechenoperationen zu jeweiligen Aufgabenpaketen zwischen verschiedenen Fahrzeugen der Anzahl weiterer Fahrzeuge (5, 13, 25) ausgetauscht werden.

8. Verfahren nach Anspruch 7, bei dem mittels der Anzahl weiterer Fahrzeuge (5, 13, 25) ein vermaschtes Netzwerk gebildet wird.

9. Verfahren nach einem der voranstehenden Ansprüche, bei dem jeweilige an die Anzahl weiterer Fahrzeuge (5, 13, 25) zu übertragende Aufgabenpakete nach einem zur Durchführung jeweiliger den Aufgabenpaketen zugeordneten Rechenoperationen erforderlichen Energieaufwand ausgewählt werden.

10. Rechensystem (1) mit einem Stammfahrzeug (3) und einer Anzahl weiterer Fahrzeuge (5, 13, 25), wobei das Stammfahrzeug (3) ein Steuergerät aufweist, das dazu konfiguriert ist, von dem Stammfahrzeug (3) für eine vorgegebene Aufgabe durchzuführende Rechenoperationen in Aufgabenpakete aufzuteilen und die Aufgabenpakete auf zumindest einen Teil der Anzahl weiterer Fahrzeuge (5, 13, 25) zu verteilen und jeweilige Aufgabenpakete der Aufgabenpakete an zumindest einen Teil der Anzahl weiterer Fahrzeuge (5, 13, 25) zu übertragen, und wobei zumindest der Teil der Anzahl weiterer Fahrzeuge (5, 13, 25), an die die jeweiligen Aufgabenpakete übertragen wurden, dazu konfiguriert ist, die den Aufgabenpaketen zugeordneten Rechenoperationen durchzuführen und Ergebnisse der Rechenoperationen an das Stammfahrzeug (3) zu übertragen, **dadurch gekennzeichnet, dass** das Steuergerät des Stammfahrzeugs (3) dazu konfiguriert ist, die Anzahl weiterer Fahrzeuge (5, 13, 25) aus Fahrzeugen (25) auszuwählen, die sich aktuell in einem deaktivierten Zustand befinden, d. h. einem Zustand, in dem das Fahrzeug (25) nicht bewegt wird, wobei jeweilige deaktivierte Fahrzeuge (25) ihren Zustand an einen Server (21) übertragen, der als zentrale Auskunftsstelle zur Auswahl von weiteren Fahrzeugen (5, 13, 25) durch das Stammfahrzeug (3) dient.

11. Rechensystem (1) nach Anspruch 10, wobei das Rechensystem (1) mindestens einen Server (21) umfasst, an den jeweilige Aufgabenpakete, die keinem Fahrzeug der Anzahl weiterer Fahrzeuge (5, 13, 25) zugeordnet wurden, übertragen werden, wobei der mindestens eine Server (21) dazu konfiguriert ist, die Rechenoperationen, die den an den mindestens einen Server (21) übertragenen Aufgabenpaketen zugeordnet sind, durchzuführen und Ergebnisse der Rechenoperationen an das Stammfahrzeug (3) und/oder mindestens ein Fahrzeug der Anzahl weiterer Fahrzeuge (5, 13, 25) zu übertragen.

12. Rechensystem (1) nach Anspruch 10 oder 11, wobei jeweilige Fahrzeuge der Anzahl weiterer Fahrzeuge (5, 13, 25) über eine bezüglich eines jeweiligen Fahrzeugs (5, 13, 25) externe Kommunikationsschnittstelle mit dem Stammfahrzeug (3) und/oder mindestens einem Server (21) verbunden sind, und wobei die Kommunikationsschnittstelle dazu konfiguriert ist, das jeweilige Fahrzeug (5, 13, 25) mit Elektrizität zu versorgen.

## Claims

1. Method for distributing a computing load of a parent vehicle (3), in which, to resolve a predetermined task of the parent vehicle (3), computing operations to be implemented are divided into task packages which comprise a number of computing operations respectively, and in which the task packages from the parent vehicle (3) are distributed to a number of further vehicles (5, 13, 25) and respective task packages are transferred to respective vehicles of the number of further vehicles (5, 13, 25), and in which computing operations allocated to the task packages are implemented by the number of further vehicles (5, 13, 25) and respective results of the computing operations allocated to the task packages are transferred to the parent vehicle (3), **characterised in that** the number of further vehicles (5, 13, 25) is selected from vehicles (25) which are currently located in a deactivated state, i.e. a state in which the vehicle (25) is not moving, wherein respective, deactivated vehicles (25) transfer their state to a server (21) which serves as a central information point for the selection of further vehicles (5, 13, 25) by the parent vehicle (3).

2. Method according to Claim 1, wherein the vehicles which are currently located in a deactivated state are connected to a charging station.

3. Method according to Claim 1 or 2, in which the distribution of the task packages to the number of further vehicles (5, 13, 25) is managed by a control device of the parent vehicle (3).

4. Method according to Claim 1 or 2, in which, to distribute the task packages to the number of further vehicles (5, 13, 25), the data packages are transferred in a first step from the parent vehicle (3) to a server (21) and in a further step from the server (21) to the number of further vehicles (5, 13, 25), and in which the distribution of the task packages to the number of further vehicles (5, 13, 25) is managed by the server (21).

5. Method according to any one of the preceding claims, in which respective task packages are transferred to a respective vehicle (5, 13, 25) of the number of further vehicles (5, 13, 25) by means of a communication interface connected to the respective vehicle (5, 13, 25) and arranged externally with regard to the respective vehicle (5, 13, 25).

6. Method according to any one of the preceding claims, in which, in the case that a predetermined minimum number of available further vehicles (5, 13, 25) is fallen below, a number of task packages is transferred to a server (21), and in which computing operations predetermined by the task packages are implemented by the server (21) and respective results of the computing operations predetermined by the task packages are transferred to the parent vehicle (3) and/or at least one vehicle of the number of further vehicles (5, 13, 25).

7. Method according to any one of the preceding claims, in which respective results of computing operations regarding respective task packages are exchanged between different vehicles of the number of further vehicles (5, 13, 25).

8. Method according to Claim 7, in which a meshed network is formed by means of the number of further vehicles (5, 13, 25).

9. Method according to any one of the preceding claims, in which respective task packages to be transferred to the number of further vehicles (5, 13, 25) are selected according to an energy expenditure required to implement respective computing operations allocated to the task packages.

10. Computing system (1) having a parent vehicle (3) and a number of further vehicles (5, 13, 25), wherein the parent vehicle (3) has a control device which is configured to divide computing operations to be implemented by the parent vehicle (3) for a predetermined task into task packages and to distribute the task packages to at least one part of the number of further vehicles (5, 13, 25) and to transfer respective task packages of the task packages to at least one part of the number of further vehicles (5, 13, 25), and wherein at least the part of the number of further vehicles (5, 13, 25) to which the respective task packages have been transferred is configured to implement the computing operations allocated to the task packages and to transfer results of the computing operations to the parent vehicle (3), **characterised in that** the control device of the parent vehicle (3) is configured to select the number of further vehicles (5, 13, 25) from vehicles (25) which are currently located in a deactivated state, i.e. a state in which the vehicle (25) is not moving, wherein respective, deactivated vehicles (25) transfer their state to a server (21) which serves as a central information point for the selection of further vehicles (5, 13, 25) by the parent vehicle (3).

11. Computing system (1) according to Claim 10, wherein the computing system (1) comprises at least one server (21) to which the respective task packages which have not been allocated to a vehicle of the number of further vehicles (5, 13, 25) are transferred, wherein the at least one server (21) is configured to implement the computing operations which are allocated to the task packages transferred to the at least one server (21) and to transfer results of the computing operations to the parent vehicle (3) and/or at least one vehicle of the number of further vehicles (5, 13, 25).

12. Computing system (1) according to Claim 10 or 11, wherein respective vehicles of the number of further vehicles (5, 13, 25) are connected to the parent vehicle (3) and/or at least one server (21) via a communication interface external with regard to a respective vehicle (5, 13, 25), and wherein the communication interface is configured to supply the respective vehicle (5, 13, 25) with electricity.

## Revendications

1. Procédé pour répartir une charge de calcul d'un véhicule parent (3), selon lequel pour résoudre une tâche prédéfinie du véhicule parent (3), des opérations de calcul à effectuer sont divisées en des paquets de tâches, qui comportent respectivement un nombre d'opérations de calcul, et selon lequel les paquets de tâches sont répartis par le véhicule parent (3) sur un nombre d'autres véhicules (5, 13, 25) et des paquets de tâches respectifs sont transmis aux véhicules respectifs du nombre d'autres véhicules (5, 13, 25) et selon lequel des opérations de calcul attribuées aux paquets de tâches sont effectuées par le nombre d'autres véhicules (5, 13, 25) et des résultats respectifs des opérations de calcul attribuées aux paquets de tâches sont transmis au véhicule parent (3), **caractérisé en ce que** le nombre d'autres véhicules (5, 13, 25) est sélectionné parmi des véhicules (25) qui se trouvent actuellement dans un état désactivé, c'est-à-dire dans un état dans lequel le véhicule (25) ne se déplace pas, dans lequel des véhicules désactivés respectifs (25) transmettent leur état à un serveur (21) qui sert de poste de renseignements central pour la sélection d'autres véhicules (5, 13, 25) par le véhicule parent (3).

2. Procédé selon la revendication 1, dans lequel les véhicules qui se trouvent actuellement dans un état désactivé sont reliés à une station de charge.

3. Procédé selon la revendication 1 ou 2, selon lequel la répartition des paquets de tâches sur le nombre d'autres véhicules (5, 13, 25) est gérée par un appareil de commande du véhicule parent (3).

4. Procédé selon la revendication 1 ou 2, selon lequel pour la répartition des paquets de tâches sur le nombre d'autres véhicules (5, 13, 25), les paquets de données sont transmis, dans une première étape, du véhicule parent (3) à un serveur (21) et, dans une autre étape, du serveur (21) au nombre d'autres véhicules (5, 13, 25), et selon lequel la répartition des paquets de tâches au nombre d'autres véhicules (5, 13, 25) est gérée par le serveur (21).

5. Procédé selon l'une quelconque des revendications précédentes, selon lequel des paquets de tâches respectifs sont transmis à un véhicule respectif (5, 13, 25) du nombre d'autres véhicules (5, 13, 25) au moyen d'une interface de communication reliée au véhicule respectif (5, 13, 25) et disposée de manière externe par rapport véhicule respectif (5, 13, 25).

6. Procédé selon l'une quelconque des revendications précédentes, selon lequel, dans le cas où un nombre minimal prédéfini d'autres véhicules disponibles (5, 13, 25) n'est pas atteint, un nombre de paquets de tâches est transmis à un serveur (21) et selon lequel des opérations de calcul prédéfinies par les paquets de tâches sont exécutées par le serveur (21) et des résultats respectifs des opérations de calcul prédéfinies par les paquets de tâches sont transmis au véhicule parent (3) et/ou à au moins un véhicule du nombre d'autres véhicules (5, 13, 25).

7. Procédé selon l'une quelconque des revendications précédentes, selon lequel des résultats respectifs d'opérations de calcul pour des paquets de tâches respectifs sont échangés entre différents véhicules du nombre d'autres véhicules (5, 13, 25).

8. Procédé selon la revendication 7, selon lequel un réseau maillé est formé au moyen du nombre d'autres véhicules (5, 13, 25).

9. Procédé selon l'une quelconque des revendications précédentes, selon lequel des paquets de tâches à transmettre au nombre d'autres véhicules (5, 13, 25) sont sélectionnés selon un apport d'énergie nécessaire à l'exécution des opérations de calcul respectives attribuées aux paquets de tâches.

10. Système de calcul (1) avec un véhicule parent (3) et un nombre d'autres véhicules (5, 13, 25), dans lequel le véhicule parent (3) comprend un appareil de commande qui est configuré pour diviser, en des paquets de tâches, des opérations de calcul à exécuter par le véhicule parent (3) pour une tâche prédéfinie et pour répartir les paquets de tâches sur au moins une partie du nombre d'autres véhicules (5, 13, 25) et pour transmettre des paquets de tâches respectifs des paquets de tâches à au moins une partie du nombre d'autres véhicules (5, 13, 25), et dans lequel au moins la partie du nombre d'autres véhicules (5, 13, 25), à laquelle les paquets de tâches respectifs ont été transmis, est configurée pour exécuter des opérations de calcul attribuées aux paquets de tâches et pour transmettre des résultats des opérations de calcul au véhicule parent (3), **caractérisé en ce que** l'appareil de commande du véhicule parent (3) est configuré pour sélectionner le nombre d'autres véhicules (5, 13, 25) parmi des véhicules (25), qui se trouvent actuellement dans un état désactivé, c'est-à-dire dans un état dans lequel le véhicule (25) ne se déplace pas, dans lequel des véhicules désactivés respectifs (25) transmettent leur état à un serveur (21) qui sert de poste de renseignements central pour la sélection d'autres véhicules (5, 13, 25) par le véhicule parent (3).

11. Système de calcul (1) selon la revendication 10, dans lequel le système de calcul (1) comporte au moins un serveur (21) auquel ont été transmis des paquets de tâches respectifs qui n'ont été attribués à aucun véhicule du nombre d'autres véhicules (5, 13, 25), dans lequel l'au moins un serveur (21) est configuré pour exécuter les opérations de calcul, qui sont attribuées aux paquets de tâches transmis à l'au moins un serveur (21) et pour transmettre des résultats des opérations de calcul au véhicule parent (3) et/ou à au moins un véhicule du nombre d'autres véhicules (5, 13, 25).

12. Système de calcul (1) selon la revendication 10 ou 11, dans lequel des véhicules respectifs du nombre d'autres véhicules (5, 13, 25) sont reliés au véhicule parent (3) et/ou à au moins un serveur (21) par le biais d'une interface de communication externe par rapport à un véhicule respectif (5, 13, 25), et dans lequel l'interface de communication est configurée pour alimenter en électricité le véhicule respectif (5, 13, 25).
